# EUROPEAN PATENT APPLICATION

(11) **EP 3 079 309 A1**
(43) Date of publication of application: **12.10.2016**
(21) Application number: 15162620.7
(22) Date of filing: 07.04.2015
(51) Int. Cl.: H04L 12/40

(54) **THERMAL SYSTEM FOR AN AUTOMOTIVE VEHICLE**

(71) Applicant: MAHLE International GmbH, 70376 Stuttgart (DE)
(72) Inventor: Groult, Herve, 54380 Dieulouard (FR); Würth, Lukas, 6700 Arlon (BE)
(74) Representative: BRP Renaud & Partner mbB Rechtsanwälte Patentanwälte Steuerberater

(57) **Abstract**

The invention relates to a thermal system (1) for an automobile, comprising:
- a central control unit (2), configured for communication with peripheral components (6-16),
- a LIN bus (3), which is connected to the central control unit (2), and
- a plurality of peripheral components (6-16), which comprise:
- at least one smart component (6, 13), which is directly connected to the LIN bus (3), and
- at least one simple component (14, 15, 16), having a first non-LIN interface (14.1, 15.1, 16.1).

In order to simplify the installation of a thermal system for an automobile, the smart component (6, 13)
- has a second non-LIN interface (6.2, 6.3, 13.2), which is connected to the first non-LIN interface (14.1, 15.1, 16.1), and
- is configured to enable at least one-way communication between the simple component (14, 15, 16) and the central control unit (2).

## Description

### Field of the invention

The invention relates to a thermal system for an automotive vehicle, and in particular to a thermal system equipped with a plurality of peripheral components controlled via a LIN bus. It also relates to a smart component for such thermal system and to a method for operating such thermal system.

### Background of the invention

In modern automobiles, there are many components related to heating, ventilation or air conditioning. Examples for such components are actuators, temperature sensors, blowers, etc. All these components are part of the so-called HVAC (heating, ventilation and air conditioning) system. Increasing consumer demands on the comfort of an automobile have lead to an ever-increasing number of components and complexity of these systems. Usually, the HVAC system is controlled by one central control unit, the HVAC controller. This HVAC controller is connected to sensor components, from which it receives signals, as well as to active components, which it controls. For instance, the controller will receive a signal from a temperature sensor, evaluate the signal and in turn send a command to a blower to reduce (or increase) warm airflow into the interior of the car and/or adjust actuator flaps.

A common standard for designing HVAC systems communication today is LIN (Local Interconnect Network). In such a system, the HVAC controller is connected to a LIN bus with numerous components arranged on the HVAC casing, or therein, that are connected to the same bus. LIN typically provides for automatic assignment of addresses to all the components connected to the LIN bus. Of course, these components need to be equipped with a LIN interface in order to communicate with the central controller through the bus. After addresses have been assigned to the components, the central controller, which constitutes the master, can send a message consisting of a header (containing the address of a component) and a data part. Likewise, the components, which constitute the slaves, can respond, e.g. in by sending data regarding the output of a motor or the position of a flap.

In the case of a HVAC, each LIN-compatible component is typically designed to have one function in the system: e.g. actuator for a flap, blower, or blower regulator, etc. Such LIN-compatible component then comprises a housing, means for interfacing with the LIN bus, a printed circuit board with microprocessor, and the functional part, e.g. actuator motor or blower regulator, is typically at least partly housed in the component housing.

However, since participation in a LIN bus system requires a certain complexity of the component (usually comprising a microprocessor), many simple components (for example temperature sensors) are usually not connected to the LIN bus, but are directly wired to the HVAC controller, for instance by a 2-pin connection, hence by a non-LIN interface. Although this helps to use simple and cheap components for some purposes, it necessitates extra pins on the central controller as well as extra wires. This makes the installation complex and space-consuming. While the LIN bus only needs a single wire (plus usually two additional wires for ground and voltage supply), the total amount of wires needed in such an HVAC system is often more than 20. The number of pins required on the HVAC controller is the same.

It is therefore the object of the present invention to simplify the installation of a thermal system with LIN bus.

The object is solved by a thermal system for an automobile according to claim 1, a smart component according to claim 11 and a method for operating a thermal system according to claim 12.

### Summary of the invention

The present invention provides a thermal system for an automotive vehicle. The term "thermal system" is used herein to designate a system handling a flow of fluid, in particular air or water, and comprising components that can change the condition of the fluid (e.g. modify flow rate or temperature) but also measure a status of the fluid (e.g. temperature, humidity, or quality of air). In practice, such a thermal system generally comprises sensor components as well as active components to perform a given function. Active component herein generally refers to any device that transfers electrical energy into mechanical energy, heat or other forms (e.g. an actuator, a blower, a heater etc.).

The inventive thermal system comprises a central control unit, which is configured for communication with peripheral components. In general, "communication" here and in the following is to interpreted in a broad sense and in particular refers to information flow or signal flow. It can be a one-way communication or a two-way communication. That is, the central control unit is configured to receive data from the peripheral components and/or to send commands to the peripheral components.

Further, the thermal system comprises a LIN bus, which is connected to the central control unit, and a plurality of peripheral components. The peripheral components comprise at least one smart component, which is directly connected to the LIN bus, and at least one simple component, having a first non-LIN interface. In general, the term "smart component" denotes a component that is directly connectable to the LIN bus, i.e. it has a LIN interface and is usually at least moderately complex, for instance in that it contains a microprocessor. The smart component also comprises a functional part (the active component) to achieve its given functionality. The smart component is adapted for communication with the central control unit via the LIN bus. It is adapted for sending and receiving messages according to the LIN format, by which it can read and/or control the functional part to achieve its given functionality. With respect to the LIN system, the central control unit is the master and the smart component is a slave.

In the context of the present application, the term "simple component", in turn, refers to a peripheral component that does not correspond to the LIN standards and therefore has no built-in LIN interface. Instead, it has a non-LIN interface. Such an interface may be the 2-pin connector of the conventional temperature sensor, which is a typical example of a simple component. It is within the scope of the invention, although unusual, that the "simple component" may be as complex or even more complex than the "smart component". The term "interface" is to be understood in the broadest sense in that the state of the simple component may be either detected or controlled via the non-LIN interface. For example, in a temperature sensor, when a voltage is applied between the two pins of the connector, the current flow through the temperature sensor will depend on its resistivity, which in turn depends on the temperature.

According to the present invention, the smart component has, by design, a second non-LIN interface, which is connected to the first non-LIN interface of the simple component, and the smart component is configured to enable at least one-way communication between the simple component and the central control unit. Normally, the second non-LIN interface is configured correspondingly to the first non-LIN interface, so if the first is a 2-pin connector, the second will also be a 2-pin connector. Wires may be provided for the connection of the two non-LIN interfaces. These wires, however, only run from the simple components to the smart component.

As a result, the connection of the simple component to the central control unit is achieved via the smart component and the LIN bus. I.e., signal transfer between the simple component and the central control unit is handled by the smart component. Of course, at least the format of the signal may change. In many cases, the simple components are only adapted to provide or receive analog signals, while any signal in the LIN bus has to be digital.

A merit of the present invention is thus to have provided the ability to take advantage of a smart component and its LIN-compatibility in order to control a basic component such as e.g. a temperature sensor. The simple component is thus simply connected to the smart component (slave), instead of being connected to the HVAC controller by a long wire. In this context, the simple component is typically a component separate from the smart component, with its own functionality, and that is, at the time of mounting the smart component to the thermal system, generally not included in the housing of the smart component. In other words, the simple component is typically separate and external to the smart component, whereby, for connection purposes, the second non LIN interface of the smart component is preferably external to the smart component.

Thanks to the invention, the installation of the thermal system is simplified significantly. The central control unit only needs an interface for connection to the LIN bus, which connects it with the smart components of the system. Simple components can be connected locally to a nearby smart component, i.e., although additional wires with respect to the LIN bus still exist, these can be local and relatively short. On the other hand, the invention does not require any modification of simple components known in the art. These can be used as they are. From a hierarchical point of view, the simple components may be referred to as "sub-slaves".

In one embodiment of the invention, the smart component is configured to receive a command from the central control unit via the LIN bus and to control the simple component via the non-LIN interfaces according to the command. I.e., the central control unit sends a LIN message over the LIN bus, which message is received by the smart component and interpreted as containing or implying a command for the simple component. In turn, the smart component generates a (digital or analogic) signal on the second non-LIN interface which corresponds to the command. For example, the simple component may be a relay and the command from the central control unit may contain the instruction to close the relay. In this case, the smart component will change the voltage on the corresponding pin of the non-LIN interface connecting it to the relay, which causes the relay to close. In this case, a digitally encoded message is translated into an analogic signal (voltage change).

According to another embodiment, the smart component is configured to receive a signal from the simple component via the non-LIN interfaces and to send information according to the signal to the central control unit via the LIN bus. The "signal" received from the simple component is to be understood in the broadest sense and may be a simple, passive response. For instance, in the above-mentioned case of the temperature sensor, the smart component applies a voltage to the temperature sensor and the strength of the current flowing through the sensor is an (analogue) signal received by the smart component.

The respective functions of the smart and simple components may be different, but could also be similar or even identical.

Generally, the function of the simple component does not have to be closely related to that of the smart component.

Often, the smart component may have an active function (actuator, blower, heater), whereas the simple component may have a sensing function (temperature or other sensor, switch, ...).

In some cases, for example when the signal of sensor (as part of the simple component) implies a reaction of an actuator (as part of the smart component), the signal provided by the simple component may be used as direct input for the smart component. Therefore, it is preferred that the smart component microprocessor unit is configured to receive a signal from the simple component via the non-LIN interface and control its functional part according to the signal. Although the signal received from the simple component may also be reported to the central control unit, the latter may be excluded from the control process.

The signal is evaluated locally in the smart component, which then controls its functional part accordingly.

In some embodiments the simple component is not "visible" within the LIN system inasmuch as it does not have an address, whereby the master is programmed to interrogate and/or control the simple component via the smart component (viz. its microprocessor) to which it is associated/connected. Alternatively, the smart component (viz. its microprocessor) may assign an address to the simple component. In such case, the smart component is configured to, after creating a LIN address for the simple component, enable communication between the central control unit and the simple component using this LIN address. That is, during the initial assignment of addresses in the LIN system, the smart component simulates the presence of an additional LIN-compatible component. It also memorises the address assigned to this additional component and handles ingoing and outgoing communication with respect to the simple component using this address. In this way, a "virtual" LIN device is created.

While one smart component may be connected to only one simple component, it is also possible that the smart component has a plurality of second non-LIN interfaces and that a plurality of simple components, each having a first non-LIN interface, are connected to the smart component, the smart component being configured to enable at least one-way communication between each of the simple components and the central control unit. It is understood that the smart component may be configured to receive signals from one simple component while controlling another simple component according to a command received from the central control unit. The smart component may also create LIN addresses for each of the simple components.

The smart component may comprise a functional part selected from the group comprising: an actuator, a blower, a blower regulator, an electrical heater, an engine cooling motor, an engine cooling motor regulator and a grill shutter actuator. It is, however, also possible that the smart component comprises a built-in sensor, alone or in addition to another functional part.

The simple component usually comprises a sensor, but in some cases comprises an active component. In particular, the simple component may comprise at least one of a switch, a potentiometer, a temperature sensor, a pressure sensor, a thermal expansion valve, a humidity sensor and an air quality sensor, a relay.

Advantageously, the microprocessor unit of the smart component may be an ASIC, which offers larger configuration possibilities that allow interfacing with the LIN-bus, and controlling the built-in functional part as well as the simple component.

A central element of the invention is a "modified" smart component. The invention therefore also provides a smart component for a thermal system for an automobile, the smart component comprising a LIN interface for connection to a central control unit via a LIN bus. It further comprises, for connection to a simple component having a first non-LIN interface, a second non-LIN interface, preferably external to the smart component. The smart component is configured to enable at least one-way communication between the simple component and the central control unit. Preferred features of the smart component have been described above with respect to the thermal system.

Further, the invention provides a method for operating a thermal system for an automobile. The thermal system comprises a central control unit, a LIN bus, which is connected to the central control unit, and a plurality of peripheral components. The peripheral components comprise at least one smart component, which is directly connected to the LIN bus, and at least one simple component having a first non-LIN interface, which is connected to a second non-LIN interface of the smart component. According to the method, the central control unit communicates with the peripheral components. Also, the central control unit and the simple component communicate at least one-way with each other via the smart component. Preferred features of the method have been described above with respect to the thermal system.

### Brief description of the drawings

Details of the invention will now be described with reference to the drawings, wherein
Fig.1 is a schematic view of an embodiment of a thermal system according to the invention; and
Fig.2 is a schematic view of a smart component with actuator functionality from Fig.1, connected to a simple component.

### Detailed description of a preferred embodiment

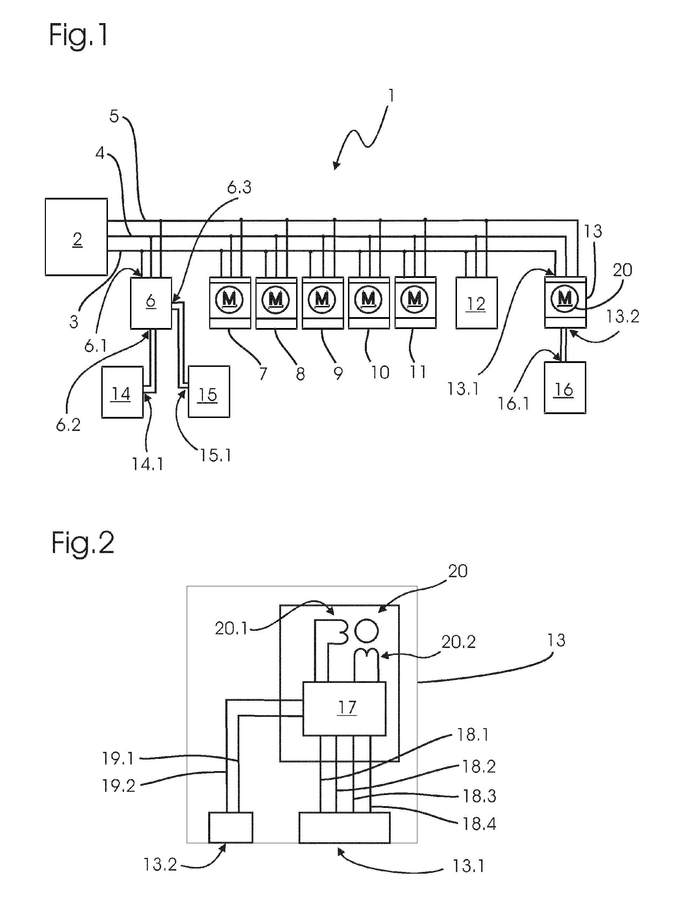

The present invention will now be described with respect to an embodiment where the thermal system is an HVAC system 1 for an automobile. A HVAC controller 2 is connected to a LIN bus 3. Further, it is connected to a ground wire 4 and a 12V voltage supply wire 5. The controller 2 constitutes the master of a LIN system. Several peripheral components 6-13 are directly connected to the LIN bus 3. For sake of simplicity, only one connection to the LIN bus 3 is shown, although in this embodiment each component 6-13 has an ingoing and an outgoing connection 18.1, 18.2 (shown in Fig.2) to the LIN bus 3. These components 6-13 are the slave components of the LIN system (it may be noted that a LIN slave may alternatively have only one connection to the LIN bus, the use of ingoing and an outgoing connection being of interest for auto-addressing). By way of example, there are six actuator components 7-11, 13 (each of which comprises a stepper motor 20) and two electrical heater components 6, 12. For power supply, the actuator components 7-11, 13 and the heater components 6, 12 are connected to the voltage supply wire 5 and the ground wire 4. All components 6-13 which are connected to the LIN bus 3 can be considered as "smart components". For communication with the HVAC controller 2 (and for other purposes), they comprise a microprocessor 17.

The HVAC system 1 also comprises three sensor components 14-16, which, by design, have no LIN capability. These are "simple components", which do not comprise a microprocessor involved in the LIN bus. They have 2-pin connector interfaces 14.1, 15.1, 16.1, which are used for application of a voltage. The current through the respective sensor component 14-16 will depend on its temperature. While according to prior art such components would be connected (via appropriate cables) directly to the HVAC controller 2, a first and second sensor component 14, 15 are connected to a heater component 6, while a third sensor component 16 is connected to an actuator component 13. For this purpose, the heater component 6, apart from an LIN interface 6.1 for connection to the LIN bus 3, comprises two 2-pin connector interfaces 6.2, 6.3, while the actuator component 13, additionally to a LIN interface 13.1, comprises one such interface 13.2. Each connection is established by a 2-wire cable connected to the respective interfaces.

Fig.2 schematically shows the internal setup of the actuator component 13. As mentioned above, it comprises a stepper motor 20. Coils 20.1, 20.2 of the motor 20 are connected to and controlled by a microprocessor 17, which is preferably an ASIC (Application Specific Integrated Circuit). The microprocessor 17 is connected to an LIN in connection 18.1, an LIN out connection 18.2. By these connections 18.1, 18.2, the microprocessor 17 communicates over the LIN bus 3. For connection to the ground wire 4 and the voltage supply wire 5, the microprocessor is also linked to a ground connection 18.3 and a voltage supply connection 18.4. For connection to the sensor component 16, a ground connection 19.1 and a voltage supply connection 19.2 are established between the 2-pin connector interface 13.2 and the microprocessor 17. The microprocessor 17 can control the voltage applied between the connections 19.1, 19.2 of the 2-pin connector interface 13.2 and also measures the corresponding current. Like in a standard LIN slave, the microprocessor 17 can receive and process ingoing LIN messages and control the motor 20 according to a command or report the position of the motor 20 to the HVAC controller 2, or other status information.

The internal setup of the heater component 6 is similar, apart from the absence of the stepper motor 20 and the presence of extra connections for the second 2-pin connector interface 6.3.

When installed in the automobile, the first and second sensor component 14, 15 are located relatively near to heater component 6, while the third sensor component 16 is located near the actuator component 13. Thus, the wires to be used are relatively short compared to prior art, where cables from every sensor run all the way to the HVAC controller 2.

The heater component 6 is configured to receive signals from the first and second sensor components (namely, the current strength in response to a voltage applied to the interfaces 14.1, 15.1) and to send corresponding information via the LIN bus 3 to the HVAC controller 2.

When the HVAC controller 2 needs to know the temperatures measured by the first or second sensor component 14, 15, it sends a LIN message over the LIN bus 3, which is received by the heater component 6. In this case, the message will be addressed to the heater component 6, since the first and second sensor component 14, 15 do not have LIN addresses. The content of the message will correspond to "report temperature of first (second) sensor". The heater component 6 receives a signal from the sensor 14, 15 corresponding to the temperature and sends an LIN message to the HVAC controller 2 corresponding to "temperature of the first (second) sensor is X degrees Celsius". Thus, a one-way communication from each sensor component 14, 15 to the HVAC controller 2 is achieved via the heater component 6.

It should be noted that the HVAC controller 2 may be constructed in a simpler way as compared to prior art, because it only needs to communicate by LIN messages. In the present case, the evaluation of the analog signals from the sensor components 14, 15 is done by the microprocessor of the heater component 6.

Apart from communicating the temperature to the HVAC controller 2, the heater component 6 may be configured to evaluate the temperature readings locally and adjust its own output accordingly. This enables a quick response to altering temperature readings, reduces the burden placed on the HVAC controller 2 and reduces the number of LIN messages on the bus 3. If, however, the HVAC controller 2 sends a message containing a command referring to the output, this command may override the setting taken by the heater component 6.

It should be noted that the temperature values received from the sensor components 14, 15 may also influence the function of other components, e.g. the actuator components 7-11. The temperature is evaluated by the HVAC controller 2, which may send a LIN message to an actuator component containing a positioning command for its motor.

The third sensor component 16 is physically connected to the actuator component 13 in the same way as the first and second sensor components 14, 15 to the heater component 6. However, the actuator component 13 is configured to introduce the third sensor component 16 as a "virtual" LIN device. In an initial address assignment process, a LIN address for the sensor component 16 is created by the actuator component 13 simulating the presence of an additional LIN device. Since the detection and address assignment in an LIN system may be based on superposition of signals (e.g. voltages) created by the individual LIN components on the LIN bus, the actuator component 13 may superimpose "its own" signal with a signal for the sensor component 16, so that the HVAC controller 2 detects two devices.

The actuator component 16 memorises its own address and, additionally, the address for the virtual LIN device. It will receive and process LIN messages directed to this address. I.e. the HVAC controller 2 can send a message directed to the virtual LIN device, which represents the sensor component 16, like to any actual LIN device. In the present case, the message content will typically be "report temperature". The actuator component 13 receives and processes the message, although it is not directed to its own address. In response to the message, the actuator component 13 "reads", i.e. receives, a signal corresponding to the temperature from the sensor component 16. Subsequently, it sends a LIN message to the HVAC controller 2 corresponding to "temperature is X degrees Celsius". If this message contains information about the sender address, it will be that of the virtual LIN device. Thus, the HVAC controller 2 can communicate with the non-LIN device 16 in the same way as with a LIN device. This could even be considered as a two-way communication between the sensor component 16 and the HVAC controller 2, but one part of the communication (reception of commands by the sensor) is only simulated by the actuator component 13.

The features of the embodiment shown are just by way of example. There are numerous possible modifications. Additional simple components could be introduced, which might be connected to other smart components. Some simple components could comprise active components, like a thermal expansion valve. One smart component could be connected to three or more simple components. The heater component 6 could simulate the presence of two virtual LIN devices for the sensor components 14, 15. The actuator component 13 could evaluate temperature readings from the sensor component 16 locally and respond by adjusting the position of its stepping motor. These are just a few examples. It should be clear that in any case the installation complexity of the HVAC system 1 is significantly reduced as compared to prior art.

Whereas the present invention has been described with respect to a thermal system such as an HVAC, it can be used in other thermal systems, for example in an engine coolant circuit comprising components such as engine cooling motor. In such case, the smart components may comprise e.g. functional parts such as engine cooling motor, engine cooling motor regulator or grill shutter, and the simple component may be a temperature sensor a pressure sensor, a thermal expansion valve, etc.

### List of reference numerals

- 1: HVAC system
- 2: HVAC controller
- 3: LIN bus
- 4: ground wire
- 5: voltage supply wire
- 6, 12: heater component
- 6.1, 13.1: LIN interface
- 6.2, 6.3, 13.2, 14.1, 15.1, 16.1: 2-pin connector interface
- 7, 8, 9, 10, 11, 13: actuator component
- 14, 15, 16: sensor component
- 17: microprocessor
- 18.1: LIN in connection
- 18.2: LIN out connection
- 18.3, 19.1: ground connection
- 18.4, 19.2: voltage supply connection
- 20: stepper motor
- 20.1, 20.2: coil

## Claims

1. Thermal system (1) for an automobile, comprising:
- a central control unit (2), configured for communication with peripheral components (6-16),
- a LIN bus (3), which is connected to the central control unit (2), and
- a plurality of peripheral components (6-16), which comprise:
- at least one smart component (6, 13) having a given functionality, which is directly connected to the LIN bus (3), and
- at least one simple component (14, 15, 16), having a first non-LIN interface (14.1, 15.1, 16.1), the at least one simple component (14, 15, 16) having a given functionality;
**characterised in that** the smart component (6, 13)
- has a second non-LIN interface (6.2, 6.3, 13.2), which is connected to the first non-LIN interface (14.1, 15.1, 16.1), and
- is configured to enable at least one-way communication between the simple component (14, 15, 16) and the central control unit (2).

2. Thermal system according to claim 1, **characterised in that** the smart component (6, 13) is configured to receive a command from the central control unit (2) via the LIN bus (3) and to control the simple component (14, 15, 16) via the non-LIN interfaces (6.2, 6.3, 13.2, 14.1, 15.1, 16.1) according to the command.

3. Thermal system according to any one of the preceding claims, **characterised in that** the smart component (6, 13) is configured to receive a signal from the simple component (14, 15, 16) via the non-LIN interfaces (6.2, 6.3, 13.2, 14.1, 15.1, 16.1) and to send information according to the signal to the central control unit (2) via the LIN bus (3).

4. Thermal system according to any one of the preceding claims, **characterised in that** the second non-LIN interface of the smart component (6, 13) is external thereto, in particular accessible externally to a housing of the smart component.

5. Thermal system according to any one of the preceding claims, **characterised in that** the smart component includes a functional part (20) to achieve its given functionality.
Thermal system according to the preceding claim, **characterised in that** the smart component (6, 13) is configured receive a signal from the simple component (14, 15, 16) via the non-LIN interfaces (6.2, 6.3, 13.2, 14.1, 15.1, 16.1), evaluate the signal and decide, at the level of the smart component, to control the functional part (20) according to the signal.

6. Thermal system according to any one of the preceding claims, **characterised in that** the smart component (6, 13) is configured to create a LIN address for the simple component (14, 15, 16), and to enable communication between the central control unit (2) and the simple component (14, 15, 16) using this LIN address.

7. Thermal system according to any of the preceding claims, **characterised in that**
- the smart component (6) has a plurality of second non-LIN interfaces (6.2, 6.3),
- a plurality of simple components (14, 15), each having a first non-LIN interface (14.1, 15.1), are connected to the smart component (6, 13), and
- the smart component (6, 13) is configured to enable at least one-way communication between each of the simple components (14, 15) and the central control unit (2).

8. Thermal system according to any one of the preceding claims, **characterised in that** each smart component includes a microprocessor unit configured to communicate with the central control unit via the LIN bus and to control or operate the functional part and the simple component connected to the respective second non-LIN interface.

9. Thermal system according to any one of the preceding claims, **characterised in that** the smart component (6, 13) comprises at least one functional part selected from the group comprising: an actuator (20), a blower, a blower regulator, an electrical heater, an engine cooling motor an engine cooling motor regulator and a grill shutter actuator.

10. Thermal system according to any one of the preceding claims, **characterised in that** the simple component (14, 15, 16) comprises at least one of a switch, a potentiometer, a temperature sensor, a pressure sensor, a thermal expansion valve, a humidity sensor and an air quality sensor.

11. Smart component (6, 13) for a thermal system for an automobile, the smart component (6, 13) comprising
- a LIN interface (6.1, 13.1) for connection to a central control unit (2) via a LIN bus (3) and,
- for connection to a simple component (14, 15, 16) having a first non-LIN interface (14.1, 15.1, 16.1), a second non-LIN interface (6.2, 6.3, 13.2)
and being configured to enable at least one-way communication between the simple component (14, 15, 16) and the central control unit (2).

12. Method for operating a thermal system for an automobile, the thermal system comprising
- a central control unit (2)
- a LIN bus (3), which is connected to the central control unit (2),
- a plurality of peripheral components (6-16), which comprise:
- at least one smart component (6, 13), which is directly connected to the LIN bus (3)
- at least one simple component (14, 15, 16), having a first non-LIN interface (14.1, 15.1, 16.1) which is connected to a second non-LIN interface (6.2, 6.3, 13.2) of the smart component (6, 13)
the method comprising
- the central control unit (2) communicating with the peripheral components (6-16), and
- the central control unit (2) and the simple component (14, 15, 16) communicating at least one-way with each other via the smart component (6, 13).
